**Europäisches Patentamt**

**European Patent Office**

**Office européen des brevets**

(11) Veröffentlichungsnummer: **0 127 843**
**A2**

## (12) EUROPÄISCHE PATENTANMELDUNG

(21) Anmeldenummer: **84105860.5**

(22) Anmeldetag: **23.05.84**

(51) Int. Cl.³: **G 01 C 19/04**
**G 01 C 25/00**

(30) Priorität: **01.06.83 DE 3319859**

(43) Veröffentlichungstag der Anmeldung:
**12.12.84 Patentblatt 84/50**

(84) Benannte Vertragsstaaten:
**DE FR GB IT**

(71) Anmelder: **TELDIX GmbH**
**Grenzhöfer Weg 36 Postfach 105608**
**D-6900 Heidelberg 1(DE)**

(72) Erfinder: **Olbrich, Bernd, Dipl.-Ing.**
**Kastanienweg 28**
**D-6830 Schwetzingen(DE)**

(74) Vertreter: **Kammer, Arno, Dipl.-Ing.**
**TELDIX GmbH Postfach 10 56 08 Grenzhöfer Weg 36**
**D-6900 Heidelberg 1(DE)**

(54) Verfahren zur Korrektur der Drift eines Kreisels.

(57) Es wird ein Verfahren beschrieben, das eine Koppel-navigationsrechnung zur Angabe der Position eines Fahrzeugs verbessert. Hierzu wird mit einer bekannten Drift eine zusätzliche Koppelrechnung durchgeführt und durch Vergleich der Abstandsvektoren zwischen der Ist-Position und der Soll-Position sowie der Ist-Position und der durch die zusätzliche Koppelrechnung ermittelte Position die unbekannte Drift ermittelt.

Diese Drift wird aufgrund verschiedener Kriterien wie zurückgelegter Weg, Fahrzeit-, Standzeitverhältnis, Überschreiten einer Bandbreite u.ä. mit einem Gewichtungsfaktor versehen und ein Kompensationswert erzeugt, der für die nachfolgende Fahrstrecke die Kreiseldrift kompensiert.

FIG.1

**T E L D I X   G m b H**

**Postfach 10 56 08**
**Grenzhöfer Weg 36**

**6900 Heidelberg 1**

Heidelberg, den 31. Mai 1983
PT-Vo/kn                    E-551

Verfahren zur Korrektur der Drift eines Kreisels

Die Erfindung betrift ein Verfahren zur Korrektur der Drift eines Kreisels, dessen Richtungssignale mit Wegsignalen eines Weggebers mittels Koppelnavigatiosrechnung zur Angabe der Position eines Fahrzeugs verwendet werden, wobei zusätzlich zu der mit der unbekannten Drift $D_I$ durchgeführten Koppelrechnung wenigstens eine weitere Koppelrechnung mit einer vorgegebenen Drift $D_{off}$ durchgeführt wird, und daß aus den Koordinaten der Sollposition $P_S$ sowie der durch die Koppelrechnungen erhaltenden Ist-Positionen $P_I$ und $P_{II}$ die unbekannte Drift nach der Beziehung

$$D_I = \frac{r_{korr}}{r_{off}} \cdot D_{off}$$

bestimmt wird, wobei $r_{korr}$ den Streckenvektor zwischen den Positionen $P_I - P_S$ und $r_{off}$ den Streckenvektor zwischen den Positionen $P_I - P_{II}$ darstellt.

**TELDIX**
HEIDELBERG

E-551
0127843

Aus der DE-OS 28 05 628 ist ein solches Verfahren bekannt. Diesem Verfahren, mit dem der Einfluß der nicht konstanten Drift reduziert werden kann, liegt die Erkenntnis zugrunde, daß durch Vergleich des durch die unbekannte Kreiseldrift verursachten Navigationsfehlers mit einem durch eine vorgegebene, bekannte Kreiseldrift errechneten Navigationsfehler auf die Größe der unbekannten Kreiseldrift geschlossen werden kann.

Wenn das Fahrzeug bei seiner Fahrt an eine Position mit bekannten Positionsdaten gelangt, kann der bei der ersten, mit der unbekannten Kreiseldrift durchgeführten Koppelrechnung sich ergebende Navigationsfehler ohne weiteres, beispielsweise mittels des Kartengerätes festgestellt werden. Wird nun zusätzlich neben dieser Koppelrechnung eine weitere Koppelrechnung mit einer bekannten Kreiseldrift durchgeführt, so liegen weitere Positionsdaten bzw. Navigationsfehler vor, welche zu der eingegebenen bekannten Kreiseldrift eine ursächliche Abhängigkeit aufweisen. Es hat sich gezeigt, daß sich mittels des Navigationsrechners ohne Schwierigkeiten der Vergleich der genannten Navigationsfehler durchführen läßt und hierbei die unbekannte Kreiseldrift sehr genau bestimmt werden kann.

Es hat sich jedoch weiterhin gezeigt, daß die Korrekturrechnung nicht beliebig durchgeführt werden kann, da hierbei unter bestimmten Umständen eine Genauigkeitsminderung verursacht wird.

Der Erfindung liegt daher die Aufgabe zugrunde, das Verfahren dahingehend weiterzubilden, daß ein genauerer Korrekturwert ermittelt bzw. die unbekannte Drift mit hoher Genauigkeit ermittelt wird.

0127843

Diese Aufgabe wird dadurch gelöst, daß die Drift $D_I$ bei Überschreiten eines Mindestabstandes zwischen den Punkten $P_I$, $P_{II}$ für die nachfolgende Driftkompensation des Kurskreisels zugrunde gelegt wird.

Die Erfindung gelangt zu der Erkenntnis, daß ein Mindestabstand zwischen Ist-Position und der Position, die mit der bekannten Drift $D_{off}$ erreicht wird, eingehalten werden muß, um eine Berechnung durchführen zu können, die ein verwertbares Ergebnis liefert.

Vorteilhafterweise können dabei die Abstände zur Startposition, d.h., der zurückgelegte Weg oder auch die Zeit, die seit dem Start oder der letzten Korrektur vergangen ist, berücksichtigt werden. Eventuell während dieser Zeit aufgetretene Warte- bzw. Stillstandszeiten sind in der Berechnung entsprechend dem unterschiedlichen Verhalten der Kreiseldrift bei Fahrt und Stillstand zu bewerten.

Diese Kriterien werden bei jeder Positionskorrektur ermittelt und gewichtet. Zusätzlich lassen sie sich auch über mehrere Positionskorrekturen hinweg aufsummieren bzw. wichten.

In einer weiteren Ausgestaltung des Verfahrens wird eine charakteristische Variable aufgrund der Abweichung zwischen der errechneten Drift und der tatsächlichen Drift gebildet, d.h., ist die Abweichung sehr gering, die Istposition also auch nahezu mit der Sollposition identisch, so wird diese Variable auf einen hohen Wert gesetzt. Bei großer Abweichung verringert die Variable ihren Wert.

E-551
0127843

Die charakteristische Variable dient sowohl zur Bestimmung eines Gewichtsfaktors als auch zur direkten Bewertung der Genauigkeit.

Es kann beispielsweise durch sprunghaftes kurzfristiges Ansteigen der Kreiseldrift eine Ermittlung und Korrektur der Istposition beeinflußt werden, derart, daß ein kontinuierliches Langzeitverhalten unterbrochen wird. Hierzu sieht das Verfahren eine Bandbreitenbegrenzung für die ermittelte Drift vor, wobei bei Überschreiten dieser Bandbreite, also bei Vorliegen einer kurzzeitigen, sprunghaften Veränderung, die Driftberechnung nicht oder nur mit einem verminderten Driftanteil durchgeführt wird.

Die Erfindung wird nachfolgend anhand eines Ausführungsbeispiels näher erläutert.

Es zeigt:

Fig. 1    den Streckenverlauf einer Fahrt mit Koppelnavigation,
Fig. 2    ein Blockschaltbild des Verfahrens,
Fig. 3    ein Diagramm, das die Ermittlung der unbekannten Drift darstellt.

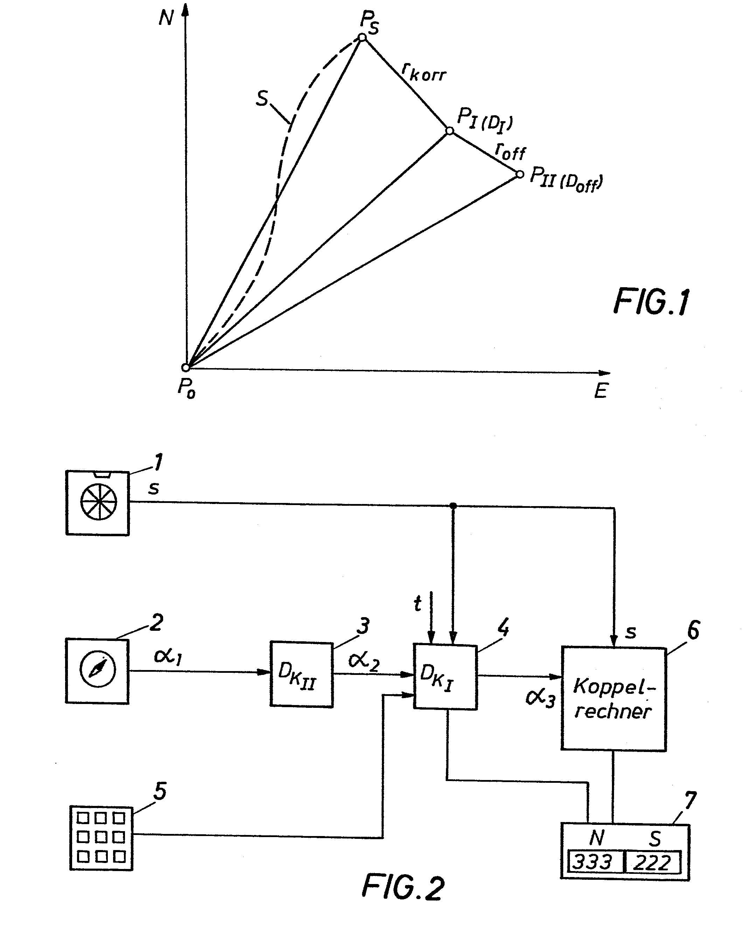

Es wird zunächst davon ausgegangen (Fig. 1), daß das Fahrzeug zu Beginn an einer bekannten Position $P_0$ mit den Koordinaten $N_0/E_0$ steht und auch der Kurswinkel des Fahrzeuges bekannt ist. Die Koordinaten der Position $P_0$ sowie der Kurswinkel sind in bekannter Weise in den Navigationsrechner eingegeben. Beginnt nun das Fahrzeug seine Fahrt durch das Gelände mit dem Fahrweg S, so wird in gewohnter Weise die Koppelrechnung durchgeführt, durch welche die zurückgelegten Wegstrecken und Kursänderungen ständig ausgewertet werden und die Koordinaten

TELDIX
HEIDELBERG

des jeweiligen Standortes bestimmt werden. Der jeweilige Standort kann in einem Kartengerät angezeigt werden. Gelangt das Fahrzeug nach einiger Zeit zu einer bekannten Position $P_S$ so wird in der Regel die errechnete Position $P_I$ hiervon um einen Navigationsfehler bzw. Abstand $r_{korr}$ abweichen. Zusätzlich zur genannten Koppelrechnung, in welcher vor allem die unbekannte Drift $D_I$ des Kreisels zu dem Navigationsfehler führt, wird eine weitere Koppelrechnung durchgeführt mit einer vorgegebenen Drift $D_{off}$.

Diese zweite Koppelrechnung führt zu einer Positionsangabe $P_{II}$ deren Koordinaten bevorzugt im Rechner gespeichert werden und welche von der Position $P_I$ um den Abstand $r_{off}$ entfernt ist. Es hat sich gezeigt, daß der Abstand $r_{off}$ ein Maß für die zusätzlich eingegebene Drift $D_{off}$ darstellt, so daß aus dem Vergleich der Driftwerte mit den jeweiligen Navigationsfehlern auf die unbekannte Kreiseldrift $D_I$ geschlossen werden kann.

Es wird somit die unbekannte Kreiseldrift $D_I$ berechnet nach der Gleichung

$$D_I = \frac{r_{korr}}{r_{off}} \cdot D_{off}$$

Es ist ersichtlich, daß bei der Berechnung der Kreiseldrift nicht die absolute Drift, sondern nur noch ein Restfehler aus der Differenz zwischen dem vorherigen Driftkompensationswert und der real erzeugten Kreiseldrift ermittelt werden muß. Dieser Restfehler bzw. das Ermitteln der aktuellen noch zu korrigierenden Drift wird nach der Beziehung

$$D_{a2} = D_I + D_{a1}$$

0127843

gebildet, wobei $D_{a1}$ der eingestellte Driftwert vor der Berechnung und $D_{a2}$ der neue bzw. neu einzustellende Driftwert darstellt.

Die Ermittlung des Vorzeichens der Drift ist nicht Gegenstand der Erfindung und ist aus dem Stand der Technik bekannt.

Das Blockschaltbild in Fig. 2 zeigt einen Wegmesser 1, einen Kurskreisel 2, eine Einrichtung 3 zur Kompensation der konstanten Drift, wie beispielsweise der durch die Erddrehung verursachten Drift, eine Schalteinrichtung 4 zur Ermittlung der unbekannten Drift $D_I$, eine Eingabeeinheit 5, einen Koppelrechner 6, dem der augenblickliche driftbereinigte Kurs $\alpha_3$ und der zurückgelegte Weg s zugeführt wird und eine Anzeigeeinheit 7. Diese Anzeigeeinheit zeigt den Standort des Fahrzeugs in Koordinatenwerten für Ost- und Nordrichtung an, es kann aber auch beispielsweise ein Kartengerät an den Koppelrechner angeschlossen werden, welches direkt auf einer Karte mittels eines Fadenkreuzes den Standort anzeigt. Der Koppelrechner wertet die Daten nach dem bekannten Koppelverfahren aus.

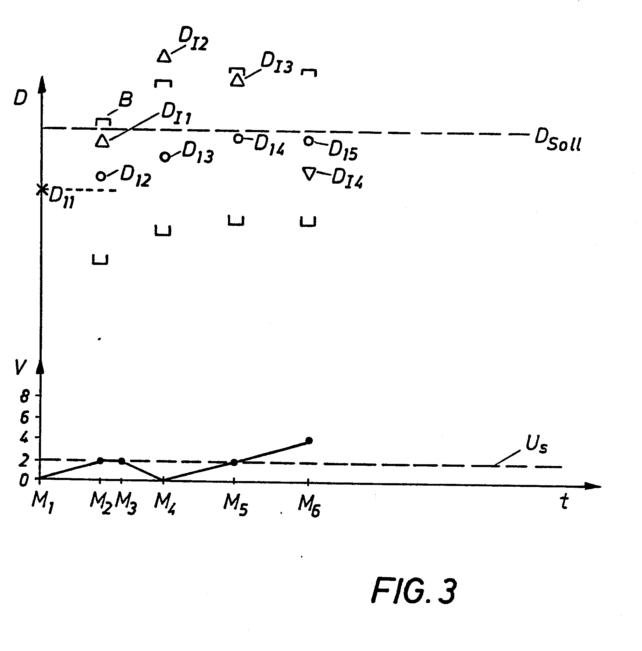

Der Kurswinkel $\alpha_1$, der von dem Kurskreisel geliefert wird und mit welchem in der ersten Kompensationsstufe ein Kurswinkel $\alpha_2$ gebildet wird, gelangt zur Schalteinrichtung 4, die nachfolgend anhand der Fig. 3 näher erläutert wird.

Zum Startzeitpunkt $M_0$ wird ein Driftwert $D_{11}$ angenommen und mit diesem Driftwert der Kurskreisel $\alpha_3$ beaufschlagt. Die Koppelrechnung liefert bis zu dem Zeitpunkt $M_1$ die momentanen Standortkoordinaten. Zum Zeitpunkt $M_1$ an dem ein bekannter Koordinatenpunkt, also eine Sollposition erreicht wird, kann eine Abweichung zwischen Anzeige

E-551
0127843

(also der Ist-Position) und tatsächlichen Koordinatenwerten festgestellt werden, d.h., es muß eine Korrektur vorgenommen werden. Die Koordinaten der Sollposition werden über die Eingabeeinheit 5 eingegeben und nach der o.g. Beziehung aufgrund der zusätzlichen Koppelrechnung mit einer vorbekannten Drift $D_{off}$ die Drift $D_{I1}$ berechnet, die zum Erreichen der Sollposition geführt hätte. Liegt diese Drift innerhalb einer Bandbreitenbegrenzung B, so bildet diese mit einem Gewichtsfaktor $< 1$ versehen den Kompensationswert $D_{I2}$ für die nachfolgende Fahrzeit. Außerdem wird eine Variable V um den Wert eins erhöht.

Zum Zeitpunkt $M_2$ wird eine weitere bekannte Sollposition erreicht und deren Koordinaten eingegeben. Aufgrund eines zu kurzen Meßintervalls, welches durch den zurückgelegten Weg und/oder die seit der letzten Messung vergangene Zeit t bestimmt wird, erfolgt eine Blockierung des Berechnungsverfahrens, d.h., der nachfolgende Fahrzeit wird weiterhin zur Berechnung der Position der Kompensationswert $D_{12}$ zugrunde gelegt. Zum Zeitpunkt $M_3$ wird an einer bekannten Sollposition erneut eine Driftkorrektur vorgenommen. Der berechnete Driftwert $D_{I2}$ erzeugt aufgrund der Gewichtung ein Kompensationswert $D_{I3}$. Aufgrund der Überschreitung der Bandbreite durch den Driftwert $D_{I2}$ wird die Variable um den Wert eins verringert. Es ist damit erkennbar, daß die Variable ein Maß für die Stetigkeit der ermittelten Driftwerte darstellt und durch Anzeige dieser Variablen beispielsweise über die Anzeigeeinheit 7 die Meßgenauigkeit indirekt dargestellt werden kann.

Bei der nächsten Positionskorrektur zum Zeitpunkt $M_4$ wird die unbekannte Drift mit $D_{I3}$ bestimmt, ein Kompensationswert $D_{I4}$ gebildet und die Variable um eins erhöht.

**TELDIX**
**HEIDELBERG**

E-551
**0127843**

Ebenso wird bei der nächsten Korrektur ein Kompensationswert $D_{15}$ gebildet und der Variablenwert erhöht. Die Variable überschreitet damit eine Umschaltschwelle $U_S$, wodurch der Gewichtungsfaktor verringert wird, beispielsweise von einem anfänglichen Wert 0,5 auf 0,2. Durch Vorgabe der Umschaltschwelle kann die resultierende Filtercharakteristik den Systemrandbedingungen in weiten Bereichen angepaßt werden, d.h., bei einer Annäherung der Kompensationswerte an die Solldrift $D_{soll}$ kann ein zu starkes Überschwingen der Driftwerte aufgrund einzelner fehlerhafter Messungen den Kompensationswert nur unwesentlich verfälschen.

Es ist mit diesem Verfahren grundsätzlich möglich, ohne eine Nordausrichtung bzw. ohne Kenntnis der Nordrichtung eine Navigationsfahrt durchzuführen.

E-551
0127843

## Patentansprüche

1. Verfahren zur Korrektur der Drift eines Kreisels, dessen Richtungssignale mit Wegsignalen eines Weggebers mittels Koppelnavigationsrechnung zur Angabe der Position eines Fahrzeugs verwendet werden, wobei zusätzlich zu der mit der unbekannten Drift $D_I$ durchgeführten Koppelrechnung wenigstens eine weitere Koppelrechnung mit einer vorgegebenen Drift $D_{off}$ durchgeführt wird, und daß aus den Koordinaten der Sollposition $P_S$ sowie den durch die Koppelrechnungen erhaltenen Ist-Positionen $P_I$ und $P_{II}$ die unbekannte Drift nach der Beziehung

$$D_I = \frac{r_{korr}}{r_{off}} \cdot D_{off}$$

bestimmt wird, wobei $r_{korr}$ den Streckenvektor zwischen den Positionen $P_I - P_S$ und $r_{off}$ den Streckenvektor zwischen den Positionen $P_I - P_{II}$ darstellt, dadurch gekennzeichnet, daß die Drift $D_I$ bei Überschreiten eines Mindestabstandes der Punkte $P_I$, $P_{II}$ der nachfolgenden Driftkompensation des Kurskreisels zugrunde gelegt wird.

2. Verfahren nach Anspruch 1, dadurch gekennzeichnet, daß der Abstand zwischen der Startposition und der Sollposition und/oder der Abstand zwischen der Sollposition $P_S$ und der Ist-Position $P_I$ einen Mindestwert überschreiten muß.

3. Verfahren nach Anspruch 1 oder 2, dadurch gekennzeichnet, daß die Fahrzeit bzw. die Einschaltzeit und/oder die Standzeit bei der Ausführung der Driftkompensation berücksichtigt wird.

**TELDIX**
**HEIDELBERG**

E-551
0127843

4. Verfahren nach einem der vorherigen Ansprüche, dadurch gekennzeichnet, daß eine charakteristische Variable erzeugt wird, deren Wert ein Merkmal für die Genauigkeit der ermittelten Drift $D_I$ in Bezug auf die tatsächliche Drift darstellt, wobei hohe Werte eine gute Genauigkeit darstellen.

5. Verfahren nach Anspruch 4, dadurch gekennzeichnet, daß aufgrund des Wertes der Variablen der Mindestabstand oder eine andere Variable variiert werden.

6. Verfahren nach Anspruch 4, dadurch gekennzeichnet, daß ein Gewichtungsfaktor bestimmt wird, mittels dem eine Gewichtung der Drift $D_I$ vorgenommen wird und der aufgrund des Wertes der charakteristischen Variablen verändert wird.

7. Verfahren nach Anspruch 4, 5, 6 oder 7, dadurch gekennzeichnet, daß eine Bandbreitenbegrenzung für die Drift $D_I$ vorgesehen ist und bei einer ermittelten Drift $D_I$, die diese überschreitet, die charakteristische Variable vermindert wird.

TELDIX
HEIDELBERG

FIG.1

FIG.2

E-551

FIG.3

E-551